# EUROPEAN PATENT APPLICATION

(11) **EP 4 248 733 A1**
(43) Date of publication of application: **27.09.2023**
(21) Application number: 23163952.7
(22) Date of filing: 24.03.2023
(51) Int. Cl.: A01G 9/04, A01G 9/029

(54) **PLANT POTS IN CLOSE-FITTING WATER COLLECTION TRAY**

(30) Priority: 24.03.2022 BE 202205210
(71) Applicant: The Pots Company NV, 8500 Kortrijk (BE)
(72) Inventor: DEVRIENDT, Nicolaes, 8500 Kortrijk (BE); BOSSUWE, Delphine, 8500 Kortrijk (BE); DEVRIENDT, Emmanuel, 8500 Kortrijk (BE)
(74) Representative: Brantsandpatents bv

(57) **Abstract**

The current invention relates to a device for a multi-pot system consisting of at least 3 plant pots (1, 11) and a water collection tray (2, 12) suitable for collecting excess water from these plant pots (1, 11), wherein the plant pots (1, 11) comprise a bottom (8) with openings (6), a wall (3) that rises from the bottom (8), and 3-8 legs (18), wherein the legs (18) are located (2) at the bottom (8), along the other side of the wall, characterized in that the water collecting tray (2, 12) comprises a top with at least 3 indentations, wherein the height of the legs (18) of a plant pot (1, 11) differs by a maximum of 10% from the depth of at least one indentation and the diameter of an indentation differs by a maximum of 10% from the diameter of the bottom (13, 8) of at least one plant pot (1, 11).

The invention also relates to the use of a multi-pot system for growing or treating plants.

## Description

### TECHNICAL FIELD

The present invention relates to a multi-pot system, consisting of at least 3 plant pots and a water collection tray. These pots comprise a bottom and a wall extending from the bottom. The plant pot has legs on the bottom, with which it can be placed close-fittingly in the water collection tray. This system can be used in horticulture for keeping, treating and/or growing a plant.

### PRIOR ART

Life is busy these days and people living in cities dedicate themselves to work every day. Life becomes relatively boring as a result. As an alternative, more and more people are tending to buy potted plants to make their environment green, so that potted plants not only have a beautification function, but also bring fresh air and relieve the nervous mind of modern people.

A conventional plant pot can contain soil and 1 or more plants. At the bottom, the pot has 1 or more holes, so that when the soil in the pot contains too much water, the water can be drained through the corresponding holes.

The system with holes in the bottom of the plant pot, however, is not able to maintain the moisture in the soil in the plant pot. The system cannot supply or drain sufficient water in time. Therefore, the plant pot should be watered in time to prevent the plant from drying out and discoloring.

Often a plant pot is placed on a saucer to collect water and to avoid water spillage. When a plant pot is placed on a surface, a saucer attached to the pot also offers advantages, in particular easier movability and manageability.

CN201282669 describes a plant pot in which a horizontal perforated dividing surface was applied at 10-50% of the height of the pot. There is an opening along the side for air to enter. Water can be returned to the soil via a sponge system. JP2019062877 describes a two-pot system where one pot serves to hold the soil and the plant. The other pot has the function of storing the water that percolates from the holes of the first pot.

CN206776180 describes a similar two-pot system. The plant pot known from this is positioned completely or almost completely in a water collection pot so that the plant pot is protected by the water collection pot during transport.

These known devices are not suitable for simple transport. Due to the difficult stackability, different shapes or sizes, the amount of pots that can be stacked within volume is limited, regardless of the amount of soil that fits in the pot.

The present invention aims to solve at least some of the above problems or drawbacks. The aim of the invention is to provide a method which eliminates those disadvantages.

### SUMMARY OF THE INVENTION

To this end, the invention provides a device according to claim 1. The device concerns a multi-pot system consisting of a plant pot and a water collection tray that guarantees an improved maintenance of an optimum moisture in the soil for plant growth. It is an object of the invention to provide a system which offers advantages to both a novice plant owner and the professional grower, for instance reducing the required watering frequency.

Preferred forms of this multi-pot system are described in the dependent claims 2 to 14. These preferred forms describe shapes and dimensions of the product, as well as characteristics of the openings in the bottom surface. According to claim 7, the water collection tray may be provided with wheels. This addition has the advantage, among other things, that the plant pot and the water collection tray can be easily moved. According to claim 13, the materials chosen for manufacturing the plant pot and the water collection tray must largely correspond.

In a second aspect, the present invention relates to a use according to claim 15. Use of the device has the advantage, among other things, that the watering frequency can be reduced and that several plant pots only require one water collection tray.

### DESCRIPTION OF THE FIGURES

**Figure 1** shows a schematic representation of a multi-pot system according to an embodiment of the present invention.
**Figure 2** shows a detailed view of a plant pot according to a possible embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise", "comprising", "consist of", "consisting of", "provided with", "include", "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

The term "soil" within the context of this document should be understood as a substrate on which/in which the plants can grow. This substrate can consist of sand, loam, clay, organic or inorganic materials or a combination of these.

In the context of this document, the term "multi-pot system" should be understood as a water collection tray in combination with at least 3 plant pots, possibly containing soil and possibly a plant.

The "closely fitting" of A into B should be understood in the context of this document as a positioning where one side of A touches the bottom of B and the diameter of the smallest circumscribed circle A is not more than 3 mm smaller than the inner diameter of B for at least 75% of the height of A when A is positioned in B. The outer wall of A and the inner wall B are largely parallel, preferably the angle differs by a maximum of 10°, more preferably by a maximum of 3°.

The top of the water collection tray is the side of the water collection tray, suitable for placing the plant pots in. The wheels are located at the bottom, so that the water collection tray can be easily rolled.

In floriculture and horticulture, plants are sometimes grown in large flower pots. These flower pots can also be very heavy and are supplied in carts or mobile racks and/or on pallets and must be placed in rows on a surface, such as a table, the ground or the like, or vice versa, the pots must be removed from the surface and are collected on pallets or the like. The existing transport devices usually contain a stationary longitudinal transport line, for example a conveyor belt, also referred to as a belt conveyor, and a smaller transverse transport line, for example also a conveyor belt, which can be part of or cooperate with a machine to place flower pots from this transverse transport line onto a table or other surface or conversely from a surface onto the transverse transport line. When supplied, the flower pots are supplied in a continuous row on the longitudinal transport line and, in groups that must form a row on the surface, are moved by means onto the transverse conveyor belt from where they are picked up together by the aforementioned machine and placed on a table. While the flower pots are picked up or put down, the next flower pots are placed on the transverse conveyor belt. Before the next row of flower pots is put down or picked up, this transverse conveyor belt and the above-mentioned surface must of course be moved relative to each other. During removal, the reverse occurs and the flower pots are thus picked up from a table or another surface and placed on the transverse conveyor line in order to be placed in groups on the longitudinal conveyor belt.

A disadvantage of the existing transport devices is that it is always required to provide a fixed transport line, which can entail considerable costs and which imposes some restrictions on the flexibility of the intended uses of the respective grounds, tables or the like, since one bound to the installed fixed transport line. Another disadvantage of the existing transport devices is that they often cannot be used for outdoor cultivation, since such fixed transport lines are usually only provided indoors, sheltered from weather influences such as rain, hail, UV radiation, freezing temperatures or the like. A water collection tray provided with wheels offers a solution to all the aforementioned and/or other disadvantages.

In a first aspect, the invention relates to a device for a multi-pot system consisting of at least 3 plant pots and a water collection tray suitable for collecting excess water from these plant pots, wherein the plant pots comprise a bottom with openings, a wall that rises from the bottom, and 3-8 legs, wherein the legs are at the bottom, along the other side of the wall, characterized in that the water collecting tray comprises a top with at least 3 indentations, wherein the height of the legs of a plant pot differs by a maximum of 10% from the depth of at least one indentation and the diameter of an indentation differs by a maximum of 10% from the diameter of the bottom of at least one plant pot. Preferably, the height of the legs differs by a maximum of 5% from the depth of at least one indentation, more preferably the bottom of the plant pot is at the same height as the water collection tray if the plant pot is located in the indentation of the water collection tray. The indentation is preferably not visible if a plant pot is placed in the indentation. The deeper the indentation, the further the bottom of the indentation is from the top of the water collection tray. Because the water collection tray is suitable for supporting several plant pots, several pots can be easily moved at the same time. Because the plant pots fit closely into the water collection tray, they are more stable during this transport.

Small trees, precious flowers or other plants are usually grown by potting them. Flowers such as orchids or small trees for admiration are often placed indoors or outdoors in pots. In particular, placing pots indoors can improve the functions of indoor beautification and air quality. It is customary in such pots to prepare mainly a pot, in which soil is placed, after which the flowers or small trees are planted in the soil. Known pots are usually made of ceramic material, or formed directly by injection molding from plastic material. In any case, the soil in pots needs water irrigation.

It was noticed by the inventors of the present invention that people who water plants have no idea about the field capacity of the soil. The field capacity is a measure of the amount of water that a saturated soil can hold after 2 to 3 days of leaching. The field capacity differs for different types of soil and is lower for sand or large rocks. Since plant pots are often filled with sand or other substrates with large pores, the field capacity will be rather low. The amount of water that may be added can be calculated based on the field capacity and the current humidity. Often both values are not known when plants are watered. The plants are thus overwatered and the excess will quickly seep through the soil. Once the water flows through the bottom of the pot, it sometimes ends up on the floor or carpet. This can cause stains. A water collection tray prevents these problems.

According to an embodiment, the bottom of the plant pot has a circular surface, a rectangular or oval surface, preferably a circular surface.

Because at least 3 plant pots are placed on the same water collection tray, it is not necessary to provide a separate tray for each pot. In addition, 3 or more plant pots can easily be moved via this water collection tray.

Because the indentation of the water collection tray fits closely around the legs of the plant pots, no water or soil can spill next to the pot and end up on the ground. Furthermore, the pressure of the plant pot on the water collection tray prevents air displacement and the evaporation of water, so that watering has to be done less often. An advantage of this is that costs can be saved by reducing the number of watering operations. The watering frequency for the plant growing in the pot during the cultivation phase can also be further reduced by means of the reservoir filled with, for example, water. In addition, the watering frequency is further reduced because the water from the water collection tray can go back up by capillary forces through the small openings at the bottom of the plant pot. In addition to lowering costs, this also offers environmental benefits, both through reduced water consumption and through less purification of contaminated water with nutrients. Moreover, the cultivation process in the greenhouses in which the plants are grown will then consume less energy due to the reduction in the number of watering operations.

The plant pot has a simple structure and is convenient to use. It can be applied for keeping, treating or growing various plants, flowers, etc. The plant pot and the water collection tray fit closely, both horizontally and vertically. Thus, by stacking successive flower pots with saucers, it is possible to obtain a very compact stacking in order to also enable storage, packaging and transport at optimally low costs. On the other hand, to make the capacity of the saucer sufficiently large, it is recommended that the half height of the plant pot should not exceed the sum of the width and the length.

A multi-pot system has the advantage compared to a system consisting of one pot with a built-in water reservoir that excess water can be easily removed. It is therefore also easy to check whether the field capacity has already been reached by looking into the water collection tray. This is not possible in a one-pot system. Furthermore, no insects can enter into this reservoir. It is possible for insects to penetrate systems that do not connect closely or systems that have an opening for draining water. The height of the legs differs from the depth of the indentations by a maximum of 10%, so that the amount of material required for their production does not increase unnecessarily. The water collection tray will have no or negligible influence on the amount of light that falls into the pot and on plants in the plant pot.

According to an embodiment, the diameter of the smallest circle around the legs is a maximum of 10% smaller than the inner diameter at the bottom of at least one indentation, preferably the two diameters differ by a maximum of 2 mm, more preferably the legs and the bottom of a plant pot fit closely, at at least one indentation.

Because the diameter of the smallest circle around the legs is a maximum of 10% smaller than the inner diameter at the bottom of at least one indentation, evaporation of the excess water that ends up in the water collection tray is avoided. Because the water collection tray fits closely to the plant pot, no water or soil can spill next to the pot and end up on the ground. Furthermore, the pressure of the plant pot on the water collection tray prevents air displacement and the evaporation of water, so that watering has to be done less often. An advantage of this is that costs can be saved by reducing the number of watering operations. The watering frequency for the plant growing in the pot during the cultivation phase can also be further reduced by means of the reservoir filled with, for example, water. In addition, the watering frequency is further reduced because the water from the water collection tray can go back up by capillary forces through the small openings at the bottom of the plant pot. In addition to lowering costs, this also offers environmental benefits, both through reduced water consumption and through less purification of contaminated water with nutrients. Because the diameter of the smallest circle around the legs is a maximum of 10% smaller than the inner diameter at the bottom of at least one indentation, the plant pot sits firmly in the indentation and the plant pot will move less if forces are exerted on it.

According to an embodiment, the legs are at least 1 mm from the edge of the bottom of the plant pots.

Because the legs are at least 1 mm from the edge of the bottom of the plant pots, the water collection tray can comprise a notch, suitable for placing at least one plant pot in close-fittingly. The diameter of the notch differs by a maximum of 10% from the outside diameter of the bottom of the plant pot. The water collection tray thus comprises a notch and an indentation, of the same diameter, respectively, suitable for fitting the bottom and the legs in in a close fit. According to an embodiment, the top surface of the water collection tray will descend stepwise, with first the notch, suitable for closely fitting the edge of the bottom of the plant pot in, and secondly an indentation, suitable for closely fitting the legs of the plant pot in. This stepwise drop of the top surface creates a liquid reservoir, suitable for collecting the excess water from the plant pot. The indentation is as such sealed off from the outside air.

According to an embodiment, the openings of the plant pots are located on a protrusion in the middle of the bottom, with the protrusion facing the legs.

Because the openings of the plant pots are located on a protrusion in the middle of the bottom, with the protrusion facing the legs, excess water must travel a long distance before it can leave the plant pot through the openings. If the openings were spread over the entire bottom surface, part of the excess water would be able to leave the plant pot more quickly through the wall. As a result, part of the soil in the plant pot cannot be watered sufficiently. In addition, this protrusion is located at the bottom of the indentation in the water collection tray, so that the excess water returns to the soil after a period of dryness. The capillary forces allow the water to be sucked back up through the plants.

According to an embodiment, the openings in the protrusion have a diameter smaller than 15 mm, preferably smaller than 5 mm.

The openings at the bottom of the plant pot are small so that the roots cannot grow out of the plant pot and into the water collection tray. There they could end up in the water, have no oxygen and die. However, the water can go up into the plant pot through the openings. The water reaches where the plant needs it via capillary forces. Most plants grow best at a field capacity of about 70%. After watering, the soil dries out, but when humidity drops to <50% of the field capacity, water from the water collection tray can make up for this deficiency through the openings at the bottom of the plant pot. Therefore, it is essential to keep the size of these openings small enough. This system ensures that the humidity in the pot is automatically maintained, resulting in better plant growth. So, overwatering the plant is impossible with this system. The roots can never be soaked in water. On the other hand, when the plant needs water, the soil can suck its water from the reservoir of the water collection tray.

So, if water is added to the pot, water will be absorbed by the soil. Excess water can then flow into the indentation, in which way the soil can contain a suitable amount of water. The water flowing into the indentation not only prevents the creation of wasted water, but also forms extra water to keep the soil moist for a long time.

According to an embodiment, the length of the legs and the depth of the protrusion are 30-50 mm, preferably 35-45 mm.

Because the length of the legs and the depth of the protrusion is 30-50 mm, water that drains from the plant pot into the water collection tray can flow back into the plant pot. The openings on the protrusion are suitable for water to pass through, but small enough to keep soil and large roots in the plant pot. According to the present invention it is possible to fill the plant pot with an excess of water that is collected by the water collecting tray. In this way a user-friendly system is provided because normally the amount of water that is optimally administered must be accurately measured, so that users or possibly a machine can fill the system with liquid relatively quickly and less accurately. Since excess water is automatically drained into the water collection tray and can eventually return to the plant pot, water remains available for the plant for longer periods. As a result, the user or machine has to refill water less often.

According to an embodiment, 3-10 wheels are attached to the water collection tray, suitable for rolling the water collection tray, preferably 4-6 wheels.

Because 3-10 wheels are attached to the water collection tray, suitable for rolling the water collection tray, three plant pots can be easily moved. The amount of wheels may depend on the size of the pots. Lifting a plant pot or placing a plant roller under a plant pot can be unsafe due to slipping and breaking of the plant pot during moving. It has been found that connecting the water collection tray closely to the plant pots can increase the frictional resistance and the legs can act as an anti-slip element. This ensures that the pots remain nicely upright and that no pots "slip away" when being moved. Because the wheels are attached to the water collection tray, it is not necessary to combine a plant pot with a base disc and a plant roller. This would create an unstable system. It has been found that the dimensions and design of the multi-pot system and the wheels are so optimally designed that this avoids slipping. In addition, the distance between the bottom of the water collection tray and the soil is minimal, which greatly reduces the risk of tipping over.

According to an embodiment, the wheels are located symmetrically on the water collection tray.

Because the wheels are located symmetrically on the water collection tray, they are suitable for evenly distributing the pressure of the plant pots over the ground and the water collection tray is stable. According to an embodiment, the wheels can rotate in all directions, so that the device can be easily moved in all directions.

The plant pots and the water collection tray fit closely together. The wheels under the water collection tray are also not visible if the angle with the ground surface is greater than 30° and the device is on the ground. The preferred form with wheels has been developed in such a way that it is easy to seek out improved environmental factors to improve growth. This provides a great head start to the growing season in residential gardens, especially in late spring climates. The preferred form of the present invention can also be used for storing ferns and potted plants during the winter months in a garage or outside building. Plants that are not frost-resistant can freeze to death and must be protected. If it is desired to have the plants outside during the day, it is possible to easily move them using the wheels at the bottom. By mounting wheels at the bottom of the system, the risk of loss of water, soil or the plant when moving is greatly reduced. In addition, the plant pot cannot be dropped, which can damage the pots, the plants and the place where they land.

According to an embodiment, an axis of symmetry over which the position of the wheels can be mirrored runs through the center of the water collection tray and each wheel and wherein these axes of symmetry do not coincide with an axis through the center of the water collection tray and the center of an indentation.

Because an axis of symmetry runs through the center of the water collection tray and each wheel, over which the position of the wheels can be mirrored and wherein these axes of symmetry do not coincide with an axis through the center of the water collection tray and the center of an indentation, a compact and stable device can be obtained. According to an embodiment, part of the edge of the plant pots is located 2-20 cm from the edge of the water collection tray. According to an embodiment, part of the wheels is located 2-20 cm from the edge of the water collection tray.

According to an embodiment, the plant pots fit close-fittingly into the water collection tray.

Because the plant pots fit close-fittingly into the water collection tray, it is less likely that the device will tip over during transport. The close fitting must be understood to mean that a positioning of the plant pot in the water collection tray is possible whereby both the bottom of the plant pot and the legs cannot be moved more than 3 mm in any direction along at least two sides. These devices have the problem that the excess water is difficult to remove. Furthermore, these water-filled open systems, admit mosquitoes and other insects via the air. These animals then live and reproduce in the stagnant water. Certain inventions sealed the flat collecting disc airtight. However, if the bottom of the flower pot is placed directly on a flat-bottomed collection disc and submerged in water, the roots of the plant may be standing in the water. This can affect the roots and is undesirable.

According to an embodiment, the water collection tray comprises a raised edge, suitable for preventing objects from ending up under the wheels. The raised edge is perpendicular to the top of the water collection tray or tilted at an angle of 3-20°. From a horizontal perspective, the raised edge covers at least 50% of the wheels and preferably 80%. The raised edge protrudes 1-5 cm above the top of the water collection tray. The diameter of the wheels differs by a maximum of 25% from the depth of the indentation in the water collection tray, more preferably by a maximum of 10%. This allows them to be stacked well without losing volume during transport.

According to an embodiment, the height of the plant pots, measured from the end of the leg to the end of the upright wall, differs by a maximum of 10% from the height of the water collection tray with the plant pot in it, measured from the plane where the wheels touch the ground to the end of that same upright wall.

Because the height of the plant pots, measured from the end of the legs to the end of the upright wall, differs by a maximum of 10% from the height of the device, measured from the plane where the wheels touch the ground to the end of that same upright wall, the device can be easily and efficiently stacked and transported.

According to an embodiment, at least part of the surface of the water collection tray bends towards an indentation at an angle of 1-5°, suitable for allowing water to run into the indentation.

Since at least part of the surface of the water collection tray bends towards an indentation at an angle of 1-5°, suitable for allowing water to run into the indentation, it is possible to water the at least three pots at the same time by pouring water in the middle of the water collection tray. The water will run to the various indentations. From the indentations, the water can be sucked to the plant roots through the openings in the bottom of the plant pot.

According to an embodiment of this invention, the materials chosen for manufacturing the plant pot and the water collection tray correspond to at least 90%. This simplifies the forming process because the polymer does not need to be modified. Furthermore, this embodiment makes it difficult to distinguish visually between the two separate pots.

According to a preferred form, the invention relates to a device in which the plant pot and the water collection tray comprise a recycled plastic and mineral. Preferably, the device, except for the wheels, is made of 30-80% recycled plastic and 5-20% minerals. In order to reduce the cost of sourcing raw materials, reduce the waste of natural resources for the production of disposable products and minimize possible negative impacts on the environment, efforts were made to develop a product from used thermoplastic materials, which would otherwise end up in an incinerator or landfill. A thermoplastic composite material based on recycled polymers has been developed. A composite is a material that is made up of different components. This often refers to fiber-reinforced plastics. These thermoplastic composite materials have a number of advantages. For example, they can be molded and formed into a number of structural and non-structural usable products, including parking signs, billboards, automotive body panels, and many others. These materials must have the desired properties such as impact resistance, swelling, heat resistance, heat protection, dimensional stability, wear resistance, etc., which are at least comparable to the properties of conventional plastic sheets, mats or boards.

However, the use of recycled materials for the manufacture of non-woven thermoplastic composite materials also has specific disadvantages. For example, the recycling of various lightweight thermoplastic products such as disposable gloves, aprons, air filters, protective covers, plastic lids, polyethylene, etc. is generally not appropriate as they often result in products with physical properties that are generally less acceptable than those of strong thermoplastic materials. Therefore, these types of products remain "waste" and are still sent to landfills and incinerators, with all the harmful consequences this entails for the environment. These deficiencies were remedied by adding minerals. Minerals, such as those from the smectite group, have excellent properties for obtaining a firm but light product.

In a second aspect, the invention relates to a use of the device according to the first aspect for keeping, growing or treating plants in at least 3 plant pots in a close-fitting water collection tray.

The device is very suitable for keeping, growing or treating plants. Any advantage and/or feature described in this document, above as well as below, may relate to either of the two aspects of the present invention.

In what follows, the invention is described by way of non-limiting figures illustrating the invention, and which are not intended to and should not be interpreted as limiting the scope of the invention.

### DESCRIPTION OF THE FIGURES

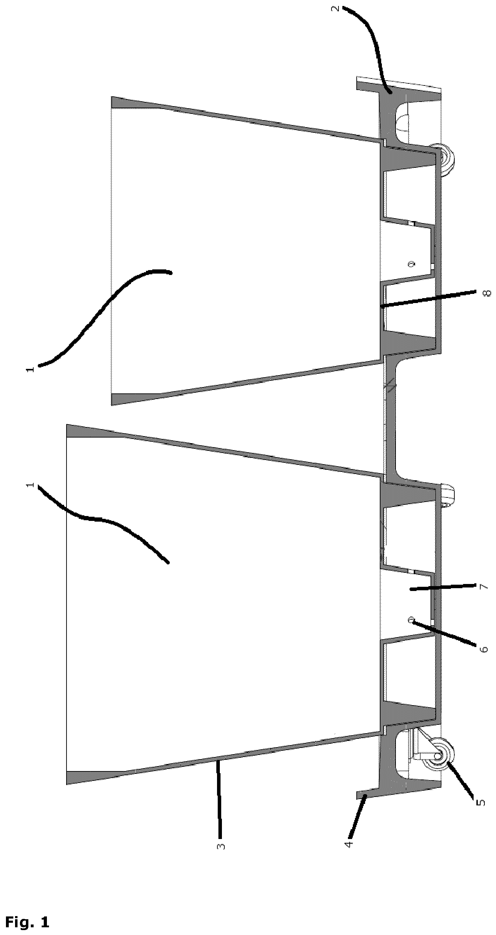

**Figure 1** shows a schematic representation of a multi-pot system according to an embodiment of the present invention.

The plant pots **1** are positioned in the water collection tray **2.** Only two plant pots are visible from this perspective. A plant pot consists of an upright wall **3,** a bottom **8** with legs and a protrusion **7** in the middle of the bottom with openings **6.** The wheels **5** at the bottom of the water collection tray **2** serve to help move the multi-pot system. Plant pots can be heavy and lifting heavy objects is undesirable for the human back. When used indoors, the plant pot can be moved to follow the sun. The water collection tray **2** comprises a raised edge **4,** suitable for preventing objects from ending up under the wheels. The raised edge is perpendicular to the top of the water collection tray or tilted at an angle of 3-20°. From a horizontal perspective, the raised edge covers at least 50% of the wheels and preferably 80%. The raised edge protrudes 1-5 cm above the top of the water collection tray.

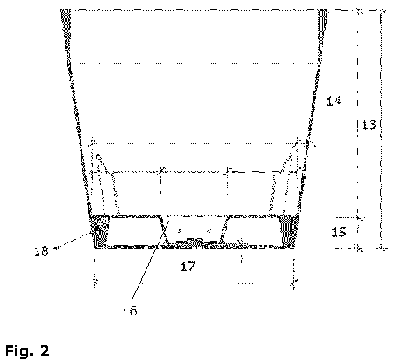

**Figure 2** shows a detailed view of a plant pot according to a possible embodiment of the present invention.

In this embodiment, the plant pot is stacked on top of the water collection tray. The water collection tray is only partially shown. The visible part of the plant pot **14** and the horizontally visible part of the water collection tray **15** are difficult to distinguish visually from each other because the two pots fit closely together and consist of substantially the same material. The protrusion of the bottom of the plant pot **16** fits into the indentation of the water collection tray **17.** In addition, the leg at the bottom of the plant pot **18** ensures better fixation between the two pots. This further reduces the chance of slipping. In addition, this extra edge complicates loss of water from the multi-pot system, both in liquid and gaseous states. The bottom of the plant pot is not completely lowered and does not touch the water collection tray over the full length, so that a reservoir for water remains available. The height of the multi-pot system **13** is hardly increased by the water collection tray.
1 and 11: plant pot
2 and 12: water collection tray
3: upright wall
4: raised edge
5: wheels
6: openings
7 and 16: protrusion
8: bottom
13: height multi-pot system
14: visible part of plant pot
15: visible part of the water collection tray
17: bottom of the water collection tray
18: leg on the bottom of plant pot

## Claims

1. Device for a multi-pot system consisting of at least 3 plant pots and a water collection tray suitable for collecting excess water from these plant pots, wherein the plant pots comprise a bottom with openings, a wall that rises from the bottom, and 3-8 legs, wherein the legs are located at the bottom, along the other side of the wall, **characterized in that** the water collecting tray comprises a top with at least 3 indentations, wherein the height of the legs of a plant pot differs by a maximum of 10% from the depth of at least one indentation and the diameter of an indentation differs by a maximum of 10% from the diameter of the bottom of at least one plant pot.

2. The device according to claim 1, **characterized in that** the diameter of the smallest circle around the legs is a maximum of 10% smaller than the inner diameter at the bottom of at least one indentation.

3. The device according to claim 1 or 2, **characterized in that** the legs are at least 1 mm from the edge of the bottom of the plant pots.

4. The device according to any of the preceding claims 1-3, **characterized in that** the openings of the plant pots are located on a protrusion in the middle of the bottom, with the protrusion facing the legs.

5. The device according to claim 4, **characterized in that** the openings in the protrusion have a diameter smaller than 15 mm.

6. The device according to any of the preceding claims 1-5, **characterized in that** the length of the legs and the depth of the protrusion is 30-50 mm.

7. The device according to any of the preceding claims 1-6, **characterized in that** 3-10 wheels are attached to the water collection tray, suitable for rolling the water collection tray.

8. The device according to preceding claim 7, **characterized in that** the wheels are located symmetrically on the water collection tray.

9. The device according to any of the preceding claims 1-8, **characterized in that** an axis of symmetry runs through the center of the water collection tray and each wheel, over which the position of the wheels can be mirrored and wherein these axes of symmetry do not coincide with an axis through the center of the water collection tray and the center of an indentation.

10. The device according to claims 1-9, **characterized in that** the plant pots fit closely into the water collection tray.

11. The device according to any of the preceding claims 7-10, **characterized in that** the height of the plant pots, measured from the end of the legs to the end of the upright wall, differs by a maximum of 10% from the height of the device therein, measured from the plane where the wheels touch the ground to the end of that same upright wall.

12. The device according to any of the preceding claims 1-11, **characterized in that** at least part of the surface of the water collection tray bends towards an indentation at an angle of 1-5°, suitable for allowing water to run into the indentation.

13. The device according to any of the preceding claims 1-12, **characterized in that** the materials chosen for manufacturing the plant pot and the water collection tray correspond for at least 90%.

14. The device according to claim 13, **characterized in that** the plant pot and the water collection tray comprise a recycled plastic and mineral.

15. Use of the device according to any of claims 1-14 for keeping, growing or treating plants in at least 3 plant pots in a close-fitting water collection tray.
